# EUROPÄISCHE PATENTSCHRIFT

(11) **EP 2 416 942 B1**
(45) Veröffentlichungstag und Bekanntmachung des Hinweises auf die Patenterteilung: **17.04.2013**
(21) Anmeldenummer: 10708167.1
(22) Anmeldetag: 26.02.2010
(51) Int. Cl.: B29C 65/08, B65B 51/22, B65B 51/30, B65B 9/08

(54) **VORRICHTUNG ZUM BEARBEITEN EINES PACKSTOFFS MITTELS ULTRASCHALL**
DEVICE FOR PROCESSING A PACKING MATERIAL USING ULTRASOUND
DISPOSITIF POUR TRAITER UN MATÉRIAU D'EMBALLAGE PAR ULTRASONS

(30) Priorität: 09.04.2009 DE 102009002298
(43) Veröffentlichungstag der Anmeldung: 15.02.2012
(73) Patentinhaber: Robert Bosch GmbH, 70442 Stuttgart (DE)
(72) Erfinder: IPPERS, Juergen, 47929 Grefrath (DE); WIEDUWILT, Ulrich, 73529 Schwaebisch Gmuend (DE)
(86) Internationale Anmeldenummer: PCT/EP2010/052492
(87) Internationale Veröffentlichungsnummer: WO 2010/115662

(56) Entgegenhaltungen:
- FR-A1- 2 732 264
- US-A- 4 517 790
- US-A1- 2004 011 452
- US-A1- 2006 144 904

## Beschreibung

### Stand der Technik

Die Erfindung geht aus von einer Vorrichtung zum Bearbeiten eines Packstoffs mittels Ultraschall nach der Gattung des unabhängigen Anspruchs. Eine solche gattungsgemäße Vorrichtung ist beispielsweise bekannt aus der US 2004/0011452 A1. Dort ist eine auf Ultraschall basierende Quersiegeleinrichtung für Riegelverpackungen beschrieben, die aus einer rotierenden Sonotrode und einem rotierenden Amboss besteht. Wie Sonotrode und Amboss jedoch mechanisch zueinander anzuordnen sind, ist nicht näher ausgeführt.

Der Abstand der Antriebselemente zur Lagerung der Antriebswelle im Gehäuse wird üblicherweise mit der Wellendurchmessung entsprechend der gewünschten Dauerfestigkeit ausgelegt. Bei rotierenden walzenförmigen Siegeleinrichtungen, die auf Ultraschallbasis siegeln, ist die jedoch die Lagerdimensionierung von der Gestaltung des Ultraschall-Schwinggebildes abhängig, nicht jedoch die statische und die dynamische Beanspruchung der Siegelwalzen.

Aus der US 2006/0144904 A1 ist bereits eine rotierende Ultraschallsiegelvorrichtung bekannt, die aus einer Sonotrode und einem Amboss besteht. Die Sonotrode ist beidseitig gelagert und wird über einen Riemen von einem Antrieb bewegt. Wie jedoch der Riemen auf die Welle der Sonotrode einwirkt bzw. in welcher Form ein Antriebsmittel gelagert ist, lässt sich nicht genau entnehmen.

Aus der US 4,517,790 ist eine Ultraschallsiegelvorrichtung bekannt, bei der eine Sonotrode eine Hub- und Senkbewegung, während der Amboss eine rotieren Bewegung vollzieht. In Figur 6 ist angedeutet, dass die Welle, auf der die Sonotrode gelagert ist, über ein Zahnrad B in Bewegung versetzt wird. Die Welle 81 ist seitlich gelagert.

Es ist Aufgabe der vorliegenden Erfindung, eine Vorrichtung anzugeben, welche bei rotativen Ultraschallsonotroden eine Auslegung der Lagerung entsprechend den zu erwartenden Antriebskräften ermöglicht. Diese Aufgabe wird gelöst durch die Merkmale des unabhängigen Anspruchs.

### Vorteile der Erfindung

Die erfindungsgemäße Vorrichtung zum Bearbeiten eines Packstoffs mittels Ultraschall hat demgegenüber den Vorteil, dass nun eine Auslegung der Lagerung entsprechend des zu erwartenden Antriebskräften möglich wird. Dies wird erfindungsgemäß dadurch erreicht, dass Aufnahmemittel vorgesehen sind, die mit dem Lagerschild verbunden sind zur Aufnahme der Antriebskräfte. Die Aufnahmemittel nehmen die Vorspannung der Antriebselemente auf und leiten sie somit nicht an die Sonotrode bzw. Siegelwalzen in Form von Durchbiegungen weiter. Dadurch bleibt die Sonotrode frei von Biegekräften, die sonst die Antriebselemente übertragen würden.

In einer zweckmäßigen Weiterbildung ist vorgesehen, dass das Aufnahmemittel hülsenförmig ausgebildet ist. Es umgibt die Welle der Sonotrode und nimmt die radial auf die Welle wirkenden Kräfte auf.

Zweckmäßigerweise ist zwischen Aufnahmemittel und Antriebselement wie beispielsweise Zahnräder oder ähnliches zumindest ein Lager, vorzugsweise ein Wälzlager vorgesehen. Über dieses Lager werden die auf die Antriebselemente wirkenden Kräfte nur an die Aufnahmemittel weitergegeben, nicht jedoch auf die Welle der Sonotrode. Somit dient das Aufnahmemittel gleichzeitig als Gegenfläche des Lagers. Dank dieser Doppelfunktionalität des Aufnahmemittels lässt sich ein relativ einfacher und zugleich kompakter Aufbau erreichen.

In einer zweckmäßigen Weiterbildung ist die Welle der Sonotrode über zumindest ein Lager in dem Lagerschild gelagert. Das Lager für die Welle ist von dem Befestigungsmittel besonders vorteilhaft mit dem Abstand λ/2 oder einem Vielfachen davon angeordnet, wobei λ die Wellenlänge der Ultraschallschwingung der Sonotrode ist Somit kann nun die Welle der Sonotrode lediglich in den Schwingungsknoten gelagert werden, so dass keine Ultraschallschwingungen in die Lagerung eingeleitet werden.

Der vorgeschlagene Aufbau zeichnet sich insbesondere dadurch aus, dass die Dimensionierung der Antriebselemente unabhängig von der Auslegung des Schwingungskörpers der Sonotrode folgen kann.

Weiterhin zweckmäßige Weiterbildungen ergeben sich aus weiteren abhängigen Ansprüchen unter der Beschreibung.

### Zeichnung

Ein Ausführungsbeispiel der Vorrichtung zum Bearbeiten eines Packstoffs mittels Ultraschall ist in der Zeichnung dargestellt und wird nachfolgend näher beschrieben.

Es zeigen:
Figur 1 eine perspektivische Vorderansicht der Vorrichtung zum Bearbeiten eines Packstoffs mittels Ultraschall,
die Figur 2 die Rückansicht der Vorrichtung nach Figur 1,
die Figur 3 eine perspektivische Ansicht der Vorrichtung insbesondere mit dem Ausnahmemittel zur Aufnahme der Antriebskräfte, sowie
die Figur 4 eine Schnittdarstellung durch die Anordnung gemäß Figur 3.

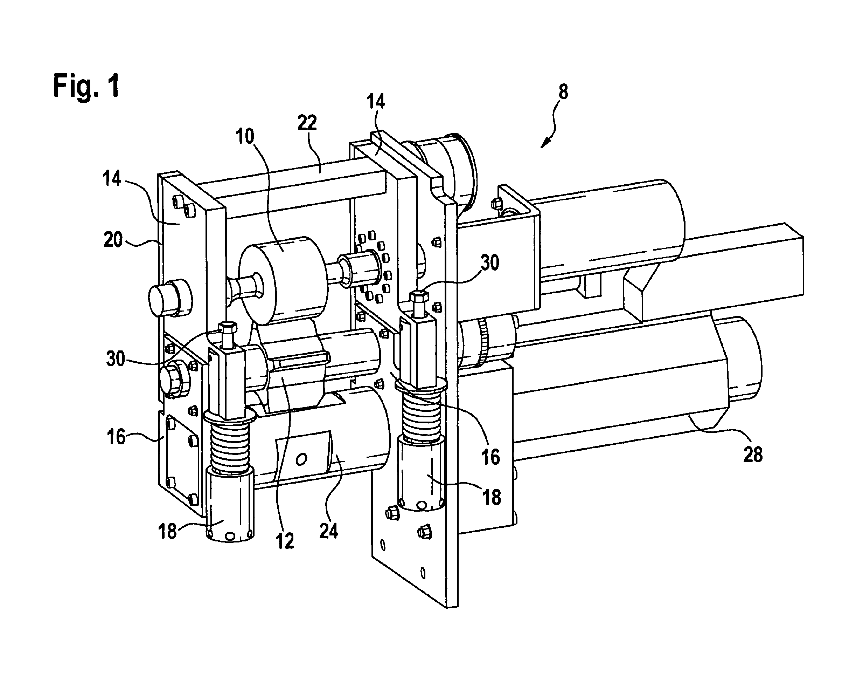

Bei der Vorrichtung gemäß Figur 1 wird eine Sonotrode 10 auf beiden Seiten von jeweils einem Lagerschild 14 drehbar gelagert geführt. Die beiden Lagerschilde 14 für die Sonotrode 10 sind an der Oberseite der Vorrichtung 8 durch ein oberes Trägermittel 22, hier beispielhaft als Trägerstab ausgeführt, seitlich miteinander verbunden. Mit der Sonotrode 10 wirkt ein ebenfalls rotierend gelagerter Amboss 12 zusammen. Der Amboss 12 ist in zwei Lagerschilden 16 gelagert. Das Lagerschild 14 der Sonotrode 10 ist mit dem jeweils darunter angeordneten Lagerschild 16 des Amboss 12 durch ein Kopplungsmittel 20 verbunden. Die beiden Lagerschilde 16 des Amboss 12 wiederum sind mit einem unteren Trägermittel 24 seitlich miteinander verbunden, welches beispielhaft als Trägerrohr ausgebildet ist. Auf der bezogen auf die Rotationsachsen von Sonotrode 10 bzw. Amboss 12 gegenüberliegenden Seite der Kopplungsmittel 20 sind jeweils Kraftmittel 18 angeordnet, über die die notwendige Siegelkraft auf die Siegelfläche von Sonotrode 10 und Amboss 12 aufgebracht werden kann. Oberhalb der Kraftmittel 18 sind jeweils Einstellmittel 30 vorgesehen. Dadurch lassen sich Siegelkraft bzw. Siegelspalt justieren.

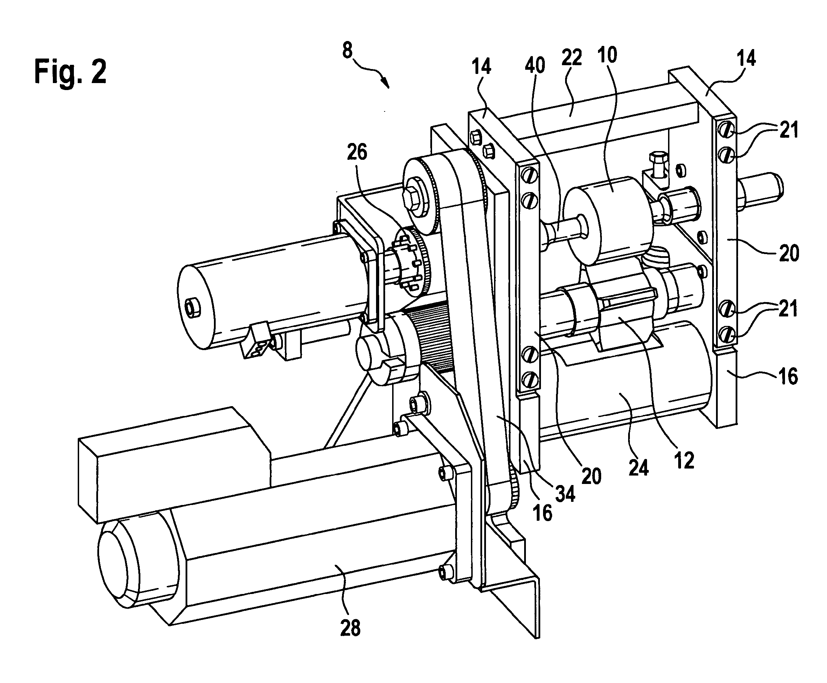

Bei der in Figur 2 gezeigten Rückansicht der in Figur 1 beschriebenen Vorrichtung 8 wird deutlich, dass das Lagerschild 14 der Sonotrode 10 jeweils mit dem darunter angeordneten Lagerschild 16 des Amboss 12 über das Kopplungsmittel 20, welches beispielhaft hier als Biegebalken ausgeführt ist, miteinander verbunden ist. Das Kopplungsmittel 20 ist am oberen Ende mit zwei Befestigungselementen 21 stirnseitig mit dem Lagerschild 14, am unteren Ende mit zwei Befestigungselementen 21 mit dem Lagerschild 16 verbunden. Dabei ist ein Spalt zwischen der Unterkante des Lagerschilds 14 der Sonotrode 10 und der Oberkante des Lagerschilds 16 des Amboss 12 vorgesehen, der lediglich durch die Kopplungsmittel 20 überbrückt wird. Weiterhin ist ein Antrieb 28 vorgesehen, der über ein Antriebselement 26 sowohl die Sonotrode 10 wie auch den Amboss 12 gegenläufig antreibt.

Die Sonotrode 10 wird mittels Zahnriemen 34, der in das Antriebselement 26 - beispielsweise eine Zahnscheibe - greift, über eine Welle 40 angetrieben. Zwischen Antriebselement 26 und Lagerschild 14 der Sonotrode 10 befindet ein hülsenförmig ausgebildetes Aufnahmemittel 46, welches zur Befestigung mit dem Lagerschild 14 am vom Antriebselement 26 abgewandten Ende flanschförmig ausläuft. An der Stirnseite des Antriebselements 26 sind Spannsätze 44 vorgesehen, um das Antriebselement 26 mit der Welle 40 in der gewünschten Art und Weise zu verbinden bzw. zu lösen.

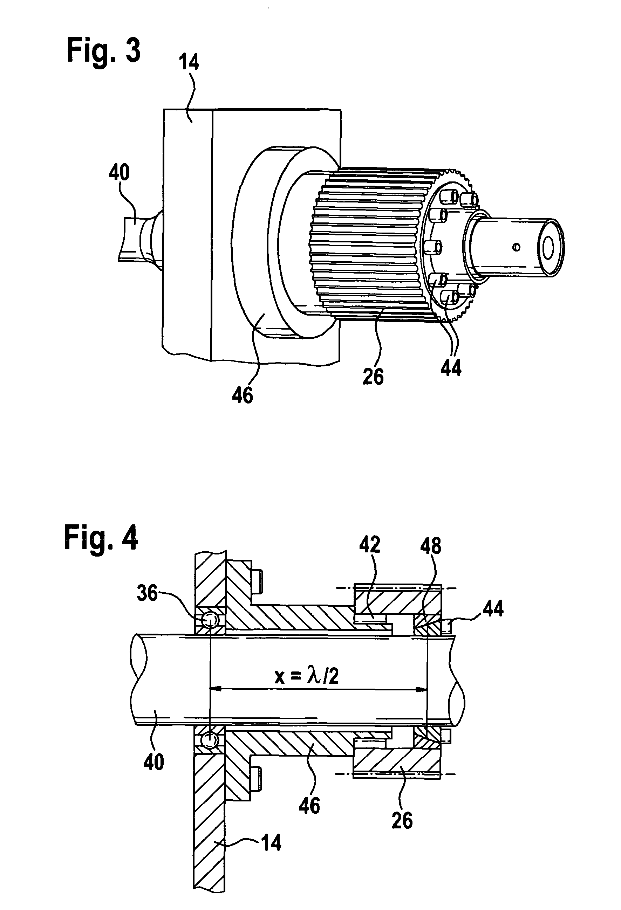

Das zylinderförmige Antriebselement 26 ist lediglich im Stirnbereich über ein ringförmiges Befestigungsmittel 48 mit der Welle 40 verbunden. Der weitere Teil des Antriebselements 26 ist über ein Lager 42 gegenüber der Oberfläche des Aufnahmemittels 46 abgestützt. An dieser Stelle weist das Aufnahmemittel 46 einen Bereich mit reduziertem Außendurchmesser auf. In der Schnittdarstellung gemäß Figur 4 ist ein Lager 36 sichtbar, welches die Welle 40 der Sonotrode 10 im Lagerschild 14 lagert. Das Aufnahmemittel 46 ist an seinem flanschförmigen Ende fest mit dem Lagerschild 14 bzw. dem Gestell der Vorrichtung 8 verbunden. Die Lager 36 sind vorzugsweise als Wälzlager ausgeführt zur Lagerung der rotativen Ultraschallsiegelwalze, nämlich der Sonotrode 10.

Die antriebsseitig notwendige Kraft wird somit in erster Linie durch das Aufnahmemittel 46 und das damit verbundene Lagerschild 14 aufgenommen. Dadurch wird die Sonotrode 10 von den Antriebskräften entlastet und nicht mit zusätzlichen, störenden Schwingungen beaufschlagt.

Zweckmäßigerweise wird die Sonotrode 10 im Schwingungsknoten gelagert. Dadurch werden keine Ultraschallschwingungen in die Lager 36 eingeleitet. Ebenfalls sollten das Antriebselement 26 im Schwingungsknoten gelagert werden. Um diese optimalen Bedingungen zu erreichen, ist ein Abstand zwischen den beiden Lagern 36 und 48 von x = λ/2 wünschenswert, wobei λ die Wellenlänge der Ultraschallschwingung der Sonotrode 10 ist.

Die Vorrichtung 8 zum Bearbeiten eines Packstoffs mittels Ultraschall arbeitet wie folgt. Sie umfasst als wesentliches Element die Sonotrode 10, die als aktives Schweißwerkzeug gegen den Amboss 12 wirkt. Von einem elektrischen Generator wird die Netzspannung in eine hochfrequente elektrische Spannung umgewandelt. An den Generator ist ein Schallwandler (Converter) angeschlossen, der wiederum die elektrische Energie in hochfrequente mechanische Schwingungen umwandelt. Mittels eines Amplitudentransformationsstücks (Booster) werden die Amplituden verstärkt oder verringert und vom Converter auf die Sonotrode 10 übertragen. Der Amboss 12 ist das passive Werkstück. Zwischen Amboss 12 und Sonotrode 10 wird das zu verschweißende Werkstück, beispielsweise der Packstoff, eingeklemmt, um so den Energieübergang zwischen Sonotrode 10 und dem Packstoff zu ermöglichen. Der Amboss 12 absorbiert die Ultraschallschwingungen der Sonotrode 10. Sowohl Sonotrode 10 als auch Amboss 12 rotieren gegenläufig und sind quasi als Siegelwalzen ausgeführt. Sie weisen mehrere Siegelflächen auf, in denen auch eine Schneidfunktion zur Abtrennung des Packstoffes integriert sein kann. Abhängig von der Art des Packstoffes muss mit hoher Genauigkeit ein Siegelspalt eingestellt werden. Als Siegelspalt bezeichnet man den Abstand der Siegelfläche der Sonotrode 10 von der Siegelfläche des Amboss 12. Dieser Siegelspalt wird durch Verstellmittel wie Verstellantrieb, Exzenter oder Aktor in der gewünschten Größe verstellt. Sie wirken auf zumindest ein Lagerschild 14 relativ zum anderen Lagerschild 16 ein. Sollte sich im laufenden Betrieb die Größe des Siegelspalts verändern, können die Verstellmittel diesen wieder auf die gewünschte Sollgröße bringen. Das beispielsweise als Feder ausgeführte Kraftmittel 18 am Ende der Lagerschilde 14, 16 dient dazu, die Lagerschilde 14, 16 zusammenzudrücken und die notwendige Siegel- beziehungsweise Schneidkraft aufzubringen. Außerdem wirken durch den Zahnriemenantrieb Kräfte auf die Sonotrode 10, die die oberen Lagerschilde 14 abheben würden, was das Kraftmittel 18 verhindert. Das Kraftmittel 18 könnte anstelle einer Feder auch pneumatisch oder hydraulisch ausgeführt sein. Die Kopplungsmittel 20 dienen der beweglichen Verbindung des Lagerschilds 14 der Sonotrode 10 mit dem Lagerschild 16 des Amboss 12. Neben den beschriebenen Varianten könnten auch Linearführungen wie beispielsweise Säulenführungen vorgesehen werden, die eine relative Linearbewegung der Lagerschilde 14, 16 zueinander zulassen.

Die Lagerschilde 14 bilden Seitenwangen, welche mit dem Trägermittel, nämlich dem Trägerstab 22, miteinander verbunden sind. Das Trägerrohr 24 könnte auch zur Stabilisierung und als Aufnahmemöglichkeit in der Verpackungsmaschine dienen. Die Antriebskopplung der oberen und unteren Siegelwalze (Sonotrode 10 und Amboss 12) erfolgt über Zahnriemen. Die Rotationsgeschwindigkeit der Siegelwalzen richtet sich nach der Bahngeschwindigkeit des zur siegelnden Packstoffschlauchs und kann z.B. ereignisgesteuert sein. Diese Dynamik wird mittels des Antriebs 28, beispielsweise ein Servomotor, erreicht, welcher die Kräfte und Momente mittels eines als Zahnriemen ausgeführten Antriebselements 26 überträgt. Die beschriebene Vorrichtung ermöglicht, die für den Fügevorgang mittels Ultraschall notwendigen Parameter wie beispielsweise Siegelspalt, Siegelkraft und Siegelzeit sehr genau und anwendungsgerecht einzustellen. Die Einstellung der Siegelkraft lässt sich über die Kraftmittel 18 realisieren. Die Kraftmittel 18 sind beispielsweise als Federn ausgeführt, so dass die Einstellung der Siegelkraft linear zur Federkennlinie möglich ist. Die Kraftmittel 18 wirken auf die beiden Lagerschilde 14, 16, so dass die Siegelkraft zwischen der oberen Siegelwalze, der Sonotrode 10, und der unteren Siegelwalze, dem Amboss 12, einzustellen ist.

Die beschriebene Vorrichtung 8 eignet sich insbesondere für die Aufbringung einer Quersiegelnaht für Schlauchbeutel. Solche Schlauchbeutelmaschinen können je nach zu verpackendem Produkt horizontal oder vertikal angeordnet sein.

## Patentansprüche

1. Vorrichtung zum Bearbeiten eines Packstoffs mittels Ultraschall, umfassend
- zumindest eine Sonotrode (10),
- zumindest ein Lagerschild (14) mit zumindest einem Lager (36) zur rotierenden Lagerung der Welle der Sonotrode (10),
- zumindest ein Antriebsmittel (26), über welches die Sonotrode (10) in Rotation versetzbar ist, wobei zumindest ein Aufnahmemittel (46) vorgesehen ist, das zumindest teilweise die Antriebskräfte des Antriebsmittels (26) aufnimmt, wobei Verbindungsmittel (48) vorgesehen sind zur festen Verbindung des Antriebselements (26) mit der Welle (40) der Sonotrode (10), **dadurch gekennzeichnet, dass** das Lager (36) für die Welle (40) von dem Verbindungsmittel (48) mit dem Abstand λ/2 oder einem Vielfachen davon angeordnet ist, wobei λ die Wellenlänge der Ultraschallschwingung der Sonotrode (10) ist.

2. Vorrichtung nach Anspruch 1, **dadurch gekennzeichnet, dass** das Aufnahmemittel (46) mit dem Lagerschild (14) verbunden ist.

3. Vorrichtung nach einem der vorhergehenden Ansprüche, **dadurch gekennzeichnet, dass** das Antriebselement (26) über zumindest ein Lager (42) mit dem Aufnahmemittel (46) bewegbar verbunden ist.

4. Vorrichtung nach einem der vorhergehenden Ansprüche, **dadurch gekennzeichnet, dass** das Lager (42) an einer Stelle des Aufnahmemittels (46) angeordnet ist, an der der Außendurchmesser Aufnahmemittels (46) gegenüber einem übrigen Bereich des Aufnahmemittels (46) reduziert ist.

5. Vorrichtung nach einem der vorhergehenden Ansprüche, **dadurch gekennzeichnet, dass** das Aufnahmemittel (46) hülsenförmig ausgebildet ist.

6. Vorrichtung nach einem der vorhergehenden Ansprüche, **dadurch gekennzeichnet, dass** das Aufnahmemittel (46) zumindest teilweise die Welle (40) umgibt.

7. Vorrichtung nach einem der vorhergehenden Ansprüche, **dadurch gekennzeichnet, dass** das Aufnahmemittel (46) einen Flansch aufweist.

8. Vorrichtung nach einem der vorhergehenden Ansprüche, **dadurch gekennzeichnet, dass** der Flansch mit den Lagerschild (14) verbunden ist.

9. Vorrichtung nach einem der vorhergehenden Ansprüche, **dadurch gekennzeichnet, dass** zumindest ein auf das Verbindungsmittel (48) wirkender Spannsatz (44) vorgesehen ist.

10. Vorrichtung nach einem der vorhergehenden Ansprüche, **dadurch gekennzeichnet, dass** das Antriebselement (26) als Zahnscheibe ausgeführt ist.

## Claims

1. Device for processing a packing material by means of ultrasound, comprising
- at least one sonotrode (10),
- at least one bearing shield (14) with at least one bearing (36) for the rotatable mounting of the shaft of the sonotrode (10),
- at least one drive means (26) by which the sonotrode (10) can be set in rotation, wherein at least one receiving means (46) is provided which at least partially absorbs the drive forces of the drive means (26), wherein connecting means (48) are provided for producing a fixed connection of the drive element (26) to the shaft (40) of the sonotrode (10), **characterized in that** the bearing (36) for the shaft (40) is arranged at a distance λ/2, or a multiple thereof, from the connecting means (48), wherein λ is the wavelength of the ultrasound oscillation of the sonotrode (10).

2. Device according to Claim 1, **characterized in that** the receiving means (46) is connected to the bearing shield (14).

3. Device according to one of the preceding claims, **characterized in that** the drive element (26) is movably connected to the receiving means (46) via at least one bearing (42).

4. Device according to one of the preceding claims, **characterized in that** the bearing (42) is arranged at a point of the receiving means (46) at which the outer diameter of the receiving means (46) is reduced in relation to a remaining region of the receiving means (46).

5. Device according to one of the preceding claims, **characterized in that** the receiving means (46) is of sleeve-shaped form.

6. Device according to one of the preceding claims, **characterized in that** the receiving means (46) at least partially surrounds the shaft (40).

7. Device according to one of the preceding claims, **characterized in that** the receiving means (46) has a flange.

8. Device according to one of the preceding claims, **characterized in that** the flange is connected to the bearing shield (14).

9. Device according to one of the preceding claims, **characterized in that** at least one clamping set (44) is provided which acts on the connecting means (48).

10. Device according to one of the preceding claims, **characterized in that** the drive element (26) is in the form of a toothed disc.

## Revendications

1. Dispositif pour traiter un matériau d'emballage par ultrasons, comprenant
- au moins une sonotrode (10),
- au moins une plaque formant palier (14) avec au moins un palier (36) pour le support rotatif de l'arbre de la sonotrode (10),
- au moins un moyen d'entraînement (26), par le biais duquel la sonotrode (10) peut être mise en rotation, au moins un moyen de réception (46) étant prévu, lequel reçoit au moins en partie les forces d'entraînement du moyen d'entraînement (26), des moyens de liaison (48) étant prévus pour la liaison fixe de l'élément d'entraînement (26) à l'arbre (40) de la sonotrode (10), **caractérisé en ce que** le palier (36) pour l'arbre (40) est disposé à une distance λ/2 ou un multiple de celle-ci du moyen de liaison (48), λ étant la longueur d'onde de l'oscillation des ultrasons de la sonotrode (10).

2. Dispositif selon la revendication 1, **caractérisé en ce que** le moyen de réception (46) est connecté à la plaque formant palier (14).

3. Dispositif selon l'une quelconque des revendications précédentes, **caractérisé en ce que** l'élément d'entraînement (26) est relié de manière déplaçable au moyen de réception (46) par le biais d'au moins un palier (42).

4. Dispositif selon l'une quelconque des revendications précédentes, **caractérisé en ce que** le palier (42) est disposé en un endroit du moyen de réception (46) au niveau duquel le diamètre extérieur du moyen de réception (46) est réduit par rapport à une région restante du moyen de réception (46).

5. Dispositif selon l'une quelconque des revendications précédentes, **caractérisé en ce que** le moyen de réception (46) est réalisé en forme de douille.

6. Dispositif selon l'une quelconque des revendications précédentes, **caractérisé en ce que** le moyen de réception (46) entoure au moins en partie l'arbre (40).

7. Dispositif selon l'une quelconque des revendications précédentes, **caractérisé en ce que** le moyen de réception (46) présente une bride.

8. Dispositif selon l'une quelconque des revendications précédentes, **caractérisé en ce que** la bride est reliée à la plaque formant palier (14).

9. Dispositif selon l'une quelconque des revendications précédentes, **caractérisé en ce qu'**au moins un insert de serrage (44) agissant sur le moyen de liaison (48) est prévu.

10. Dispositif selon l'une quelconque des revendications précédentes, **caractérisé en ce que** l'élément d'entraînement (26) est réalisé sous forme de disque denté.
